# EUROPEAN PATENT SPECIFICATION

(11) **EP 1 787 516 B1**
(45) Date of publication and mention of the grant of the patent: **23.10.2013**
(21) Application number: 05077567.5
(22) Date of filing: 09.11.2005
(51) Int. Cl.: A01N 47/02, A01N 25/02

(54) **Sprout inhibiting composition**
Keimungshemmende Zusammensetzung
Composition inhibitrice de germination

(43) Date of publication of application: 23.05.2007
(73) Proprietor: Agrichem B.V., 4906 CV Oosterhout (NL)
(72) Inventor: Voorbraak, Petrus Johannes Gerardus Maria, 2320 Hoogstraten (BE)
(74) Representative: Korsten, Marius

(56) References cited:
- EP-A- 1 604 570
- WO-A-2005/074685
- US-A1- 2005 137 090

## Description

The present invention relates to a sprout inhibiting composition comprising chlorpropham, to a method for preparing this composition and to the use thereof.

The purpose of sprout inhibitors is to prevent sprouting of crop, in particular potatoes, during storage. The sprouting is avoided due to the fact that sprout inhibitors inhibit cell division of the crop.

Chlorpropham (i.e. isopropyl 3-chlorocarbanilate) is a commonly applied sprout-inhibiting compound. It is mainly used for preventing potatoes in storage from sprouting. To this end the potatoes are brought into contact with a chlorpropham composition. However, the chlorpropham compositions that are presently on the market usually comprise dichloromethane (methylene chloride) as a solvent. (see e.g. US 2005/0137090)

The use of dichloromethane is problematic for reasons that it is a possible carcinogenic. Humans that are exposed to it have an increased chance for developing cancer. The main routes of human exposure to dichloromethane are inhalation, digestion and dermal absorption. Therefore, while applying a chlorpropham composition comprising dichloromethane to potatoes in storage stringent precautions have to be taken, such as for instance an air-sealed storage location, and protective clothing.

A further disadvantage of the use of dichloromethane as a solvent is that it is very damaging for the environment.

A more practical disadvantage of the use of dichloromethane is that it cannot be stored in plastic containers, making the use of relatively expensive iron and aluminium storage containers necessary.

US 2005/0137090 also discloses solutions of CIPC in terpene oils along with surfactants.

The present invention intends to alleviate the above-mentioned problems.

### A first aspect of the present invention relates to a sprout inhibiting composition comprising chlorpropham as an active compound and a lactate as a solvent.

The advantage of this composition is that as a solvent a lactate is used, or a mixture of lactates. These lactates are contrary to dichloromethane not carcinogenic and are not as damaging to the environment as dichloromethane. Moreover, by using a solvent according to the present invention plastic containers can be used for storing the sprout inhibiting composition instead of relatively expensive iron or aluminium containers. The lactates are hexyllactate or an alkylhexyllactate, more preferably 2-methylhexyllactate, 2-pentylhexyllactate, 2-butylhexyllactate.

The solvent is most preferably 2-ethyl-hexyllactate. The advantage of this solvent is that it is not carcinogenic and that it is not harmful for the environment whilst chlorpropham may be easily dissolved in it. Further, it is a very suitable solvent for formulating an aerosol. Most preferably the solvent is 2-ethylhexyl-S-lactate.

The composition according to the invention comprises 100-500 grams chlorpropham per litre solvent, more preferably from 250-350 grams chlorpropham per litre solvent.

A second aspect of the present invention relates to a method for the preparation of a sprout inhibiting composition comprising the steps of:
i) providing chlorpropham as an active compound; and
ii) dissolving the chlorpropham in a lactate solvent.

The advantage of this method is that the composition can be made without endangering the people preparing it. As already indicated dichloromethane is a possible carcinogenic and preventing people from working with it increases the safety of their work. Furthermore, the solvent according to the present invention is not harmful to the environment. This means that if during preparation or storage some solvent is spilled this will not have a negative effect on the environment. Moreover, during preparation plastic containers instead of iron or aluminium containers may be used. This decreases the weight of a container considerably having a positive effect on transportation costs.

A third aspect of the present invention relates to the use of the above mentioned composition for the inhibition of sprout forming in crops, in particular in potatoes. The composition is preferably applied in the form of an aerosol, also called fogging. This fogging results in particular good results when for example potatoes are stored for reasons that the aerosols can easily penetrate the spaces between the piled/stored potatoes.

Hereafter the invention will be further illustrated by means of the following examples, which are given for illustrative purposes.

### Examples

### Example 1

A composition comprising chlorpropham as an active compound and a lactate as a solvent was formulated in the following way. A drum of 200 kg solid crystalline chlorpropham was heated in a heating chamber to about 42 degrees such that the chlorpropham melted. This melted chlorpropham was put in a 2-ethylhexyl-S-lactate such that a composition was obtained comprising 300 grams chlorpropham per litre composition. The mixture was stirred for about 30 minutes such that substantially all chlorpropham dissolved in the 2-ethylhexyl-S-lactate. Then after an optional filtration step 5 litre plastic containers were filled with this composition.

### Example 2

Sprouting tests were conducted using the composition of Example 1 (i.e. 300 gram chlorpropham per litre composition). Moreover, for comparison a composition comprising chlorpropham in dichloromethane (also 300 gram chlorpropham per liter composition) was used, namely "Brabant Kiemremmer Vloeibaar 3 (BKV-3)". These compositions were tested on ware potatoes (Solanum tuberosum). The varieties were Bintje, Asterix and Lady Rosetta. The composition of Example 1 and BKV-3 were applied in split dosages, in a total amount of 120 ml/ton. Treatments were compared for efficacy and selectivity.. The different treatments were also compared to the untreated control.

During the storage period the rate of sprout growth was assessed. At the end of the storage period of each sub-sample the number of tubers with sprout growth was determined.

The product Chlorpropham 300 g/l HN (as prepared in example 1) was tested in three trials to determine the efficacy and selectivity in stored ware potato *(Solanum* tuberosum, SOLTU). The varieties were Bintje, Lady Rosetta and Asterix. The used potatoes were free of mechanical damage and the percentage dirt tare was low. At the beginning of the trial period the tubers were free of sprout growth.

The potatoes were stored in refrigerated containers. Trial 1 and 2 were stored together in one container, and trail 3 was stored in another container. The cultural conditions were uniform for all plots of a trial.

The container has a fresh air make-up vent to provide ventilation for the potatoes, which require fresh air circulation. Because the potatoes were already dry, the airflow was set to a 50% position. Normally the first month of storage of the maximum airflow was given (100% position), in order to transport the released water from the potatoes. The recirculation fan motors were set on low speed during the whole trial period. The plots of each trial were stored in the same container. Each plot contains a plastic crate with 20 kg potato tubers, divided in four nets of 5 kilogram's (sub-sample A, B, C and D). Each crate was put into a solid plastic bag. The bag reaches a height of about 55 cm and stayed completely open above during the trial period. By this method the volatile chlorpropham stayed reasonably on the potatoes, and at the same time the influence of adjacent plots were kept to a minimum. After the assessment on sub-sample A, B, C there were stored again in the crate, so each plot contains still 20 kg potato tubers

On each trial were five objects with four replicates. The different dosages of the test product and the untreated control were arranged in a suitable statistical design. Plots were arranged in a randomised block design.

The application took place according to good experimental practice (GEP) with a thermal fogging machine (Swing-Fog) in combination with a Fog-Box. The Fog-Box is an airtight box with re-circulated ventilation. In the Fog-Box is a room for four crates with potato tubers. Each crate has an air permeable bottom, the mesh width is 1 cm. At application all four replicates of an object were placed in the Fog-Box and the product was thermally fogged in the sealed off Fog-Box with a Swing-Fog. After that the air in the Fog-Box was re-circulated through the tubers for 90 minutes.

The trials started in November 2004, after the potatoes were fully cured and free of surface moisture. The treatments in object A and C were started 4 weeks after storage and the treatments in object B and D were started 2 weeks after storage. In the treated objects the products were applied in split dosages. The total dosage was 120 ml/ton potatoes for all treatments. The total dosage was applied in object A and C in four times and was applied in object B and D in eight times. At the applications there were no deviations from the intended dosage.

The temperature in the storage was maintained on 8°C during the trial period. During the storage period a fan re-circulated the air continuously to get an even environment in the whole container.

For efficacy testing the rate of sprout growth was determined. This rate of sprout growth was assessed with a skill of 0 (very much sprout growth) to 10 (no sprout growth).

At 12 weeks after storage the assessments were made on sub-sample A. At 20 weeks after storage the assessments were made on sub-sample B. At 28 weeks after storage the assessments were made on sub-sample C. At 36 weeks after storage the assessments were made on sub-sample D, about 1 months after the last treatment.

Data were analysed statistically by general ANOVA, followed by the Student t-test. The results of the assessments are given in tables 1.1-1.4. From these tables it is clear that the growth of sprouts was in the untreated object obviously more than in the treated objects. The sprout inhibition of both products was good. For the rate of sprout growth Chlorpropham 300 g/l HN (example 1) was comparable to BKV-3. This means that although another solvent is used, i.e. ethylhexyl-S-lactate in stead of dichloromethane substantially the same results on inhibition on sprout growth are obtained.

Similar results can be obtained with the following lactates 2-methylhexyllactate, 2-ethylhexyllactate, 2-pentylhexyllactate, 2-butylhexyllactate.

**Table 1.1. Average rate of sprout growth (0=very much sprout growth, 10=no sprout growth) at 12 weeks after storage.**

| Object | Number of treatments | Trial 1 Variety Bintje | Trial 2 Variety Lady Rosetta | Trial 3 Variety Asterix |
|---|---|---|---|---|
| A. Brabant Kiemremmer Vloeibaar 3 | 1 (30 ml/ton) | 9.88 a | 9.94 a | 9.94 a |
| B. Brabant Kiemremmer Vloeibaar 3 | 2 (37.5 ml/ton) | 10.00 a | 10.00 a | 10.00 a |
| C. Chlorpropham 300 g/l HN | 1 (30 ml/ton) | 9.88 a | 9.94 a | 9.94 a |
| D. Chlorpropham 300 g/l HN | 2 (37.5 ml/ton) | 10.00 a | 10.00 a | 10.00 a |
| O. untreated | | 8.94 b | 9.31 b | 6.81 b |

**Table 1.2. Average rate of sprout growth (0=very much sprout growth, 10=no sprout growth) at 20 weeks after storage.**

| Object | Number of treatments | Trial 1 Variety Bintje | Trial 2 Variety Lady Rosetta | Trial 3 Variety Asterix |
|---|---|---|---|---|
| A. Brabant Kiemremmer Vloeibaar 3 | 2 (60 ml/ton) | 9.75 a | 9.50 b | 9.56 a |
| B. Brabant Kiemremmer Vloeibaar 3 | 4 (62.5 ml/ton) | 9.94 a | 10.00 a | 9.94 a |
| C. Chlorpropham 300 g/l HN | 2 (60 ml/ton) | 9.63 a | 9.50 b | 9.94 a |
| D. Chlorpropham 300 g/l HN | 4 (62.5 ml/ton) | 9.88 a | 10.00 a | 9.81 a |
| 0. untreated | | 5.31 b | 6.06 c | 5.19 b |

**Table 1.3. Average rate of sprout growth (0=very much sprout growth, 10=no sprout growth) at 28 weeks after storage.**

| Object | Number of treatments | Trial 1 Variety Bintje | Trial 2 Variety Lady Rosetta | Trial 3 Variety Asterix |
|---|---|---|---|---|
| A. Brabant Kiemremmer Vloeibaar 3 | 3 (90 ml/ton) | 9.50 a | 9.13 a | 8.31 b |
| B. Brabant Kiemremmer Vloeibaar 3 | 6 (87.5 ml/ton) | 9.50 a | 9.44 a | 9.56 ab |
| C. Chlorpropham 300 g/l HN | 3 (90 ml/ton) | 9.19 a | 9.50 a | 8.44 ab |
| D. Chlorpropham 300 g/l HN | 6 (87.5 ml/ton) | 9.31 a | 9.44 a | 9.63 a |
| O. untreated | | 0.38 b | 3.50 b | 1.19 c |

**Table 1.4. Average rate of sprout growth (0=very much sprout growth, 10=no sprout growth) at 36 weeks after storage.**

| Object | Number of treatments | Trial 1 Variety Bintje | Trial 2 Variety Lady Rosetta | Trial 3 Variety Asterix |
|---|---|---|---|---|
| A. Brabant Kiemremmer Vloeibaar 3 | 4 (120 ml/ton) | 9.00 a | 8.63 b | 8.94 b |
| B. Brabant Kiemremmer Vloeibaar 3 | 8 (120 ml/ton) | 8.94 a | 9.56 a | 9.44 a |
| C. Chlorpropham 300 g/l HN | 4 (120 ml/ton) | 8.63 a | 9.44 a | 9.19 ab |
| D. Chlorpropham 300 g/l HN | 8 (120 ml/ton) | 9.06 a | 9.56 a | 9.38 a |
| O. untreated | | 0.00 b | 1.00 c | 0.13 c |

## Claims

1. Sprout inhibiting solution comprising 100-500 g/l chlorpropham as an active compound and at least one lactate as a solvent wherein the lactate is a hexyllactate or an alkylhexyllactate.

2. Solution according to claim 1, wherein the lactate is 2-methylhexyllactate, 2-ethylhexyllactate, 2-pentylhexyllactate, 2-butylhexyllactate.

3. Solution according to claim 1 or claim 2, wherein the lactate is 2-ethylhexyl-S-lactate.

4. Solution according to any of the claim 1 to 3, comprising 250-350 g/l chlorpropham.

5. Method for the preparation of a sprout inhibiting solution according to any of the claims 1 to 4 comprising the steps of:
i) providing chlorpropham as an active compound; and
ii) dissolving the chlorpropham in a lactate solvent, wherein the lactate is 2-methylhexyllactate, 2-ethylhexyllactate, 2-pentylhexyllactate, 2-butylhexyllactate.

6. Method according to claim 5, wherein the lactate is 2-ethylhexyl-S-lactate.

7. Use of a solution according to any of the claims 1 to 4 for the inhibition of sprout forming in crops.

8. Use of a solution according to any of the claims 1 to 4 for the inhibition of sprout forming in potatoes.

9. Use according to claim 7 or claim 8, wherein the solution is applied in the form of an aerosol.

10. Use of a lactate as a solvent for chlorpropham, wherein the lactate is a hexyllactate or an alkylhexyllactate.

11. Use according to claim 9 or 10, wherein the lactate is 2-methylhexyllactate, 2-ethylhexyllactate, 2-pentylhexyllactate, 2-butylhexyllactate.

12. Use according to claim 11, wherein the lactate is 2-ethylhexyl-S-lactate.

## Patentansprüche

1. Keimhemmende Lösung, welche umfasst
100-500 g/l Chlorpropham als eine aktive Verbindung und zumindest ein Laktat als ein Lösungsmittel, wobei das Laktat ein Hexyllaktat oder ein Alkylhexyllaktat ist.

2. Lösung gemäß Anspruch 1, wobei das Laktat ein 2-Methylhexyllaktat, 2-Ethylhexyllaktat, 2-Pentylhexyllaktat, 2-Butylhexyllaktat ist.

3. Lösung gemäß Anspruch 1 oder Anspruch 2, wobei das Laktat ein 2-Ethylhexyl-S-Laktat ist.

4. Lösung gemäß einem der Ansprüche 1 bis 3, welche 250-350 g/l Chlorpropham umfasst.

5. Verfahren zum Aufbereiten einer keimhemmenden Lösung gemäß einem der Ansprüche 1 bis 4, welches die Schritte umfasst:
i) Vorsehen von Chlorpropham als eine aktive Verbindung; und
ii) Lösen des Chlorprophams in einem Laktatlösungsmittel, wobei das Laktat ein 2-Methylhexyllaktat, 2-Ethylhexyllaktat, 2-Pentylhexyllaktat, 2-Butylhexyllaktat ist.

6. Verfahren gemäß Anspruch 5, wobei das Laktat ein 2-Ethylhexyl-S-Laktat ist.

7. Verwendung einer Lösung gemäß einem der Ansprüche 1 bis 4 für die Hemmung von Keimbildung bei Getreide.

8. Verwendung einer Lösung gemäß einem der Ansprüche 1 bis 4 für die Hemmung von Keimbildung bei Kartoffeln.

9. Verwendung gemäß Anspruch 7 oder Anspruch 8, wobei die Lösung in Form eines Aerosols aufgetragen wird.

10. Verwendung eines Laktats als ein Lösungsmittel für Chlorpropham, wobei das Laktat ein Hexyllaktat oder ein Alkylhexyllaktat ist.

11. Verwendung gemäß Anspruch 9 oder 10, wobei das Laktat ein 2-Methylhexyllaktat, 2-Ethylhexyllaktat, 2-Pentylhexyllaktat, 2-Butylhexyllaktat ist.

12. Verwendung gemäß Anspruch 11, wobei das Laktat ein 2-Ethylhexyl-S-Laktat ist.

## Revendications

1. Solution inhibant la germination comprenant de 100 à 500 g/l de chlorpropham en tant que composé actif et au moins un lactate en tant que solvant, dans laquelle le lactate est un hexyllactate ou un alkylhexyllactate.

2. Solution selon la revendication 1, dans laquelle le lactate est le 2-méthylhexyllactate, le 2-éthylhexyllactate, le 2-pentylhexyllactate, le 2-butylhexyllactate.

3. Solution selon la revendication 1 ou la revendication 2, dans laquelle le lactate est le 2-éthylhexyl-S-lactate.

4. Solution selon l'une quelconque des revendications 1 à 3, comprenant de 250 à 350 g/l de chlorpropham.

5. Procédé de préparation d'une solution inhibant la germination selon l'une quelconque des revendications 1 à 4, comprenant les étapes de :
i) fourniture du chloropropham en tant que composé actif ; et
ii) dissolution du chlorpropham dans un solvant de lactate, le lactate étant le 2-méthylhexyllactate, le 2-éthylhexyllactate, le 2-pentylhexyllactate, le 2-butylhexyllactate.

6. Procédé selon la revendication 5, dans lequel le lactate est le 2-éthylhexyl-S-lactate.

7. Utilisation d'une solution selon l'une quelconque des revendications 1 à 4 pour l'inhibition de la formation de germes dans des cultures.

8. Utilisation d'une solution selon l'une quelconque des revendications 1 à 4 pour l'inhibition de la formation de germes dans les pommes de terre.

9. Utilisation selon la revendication 7 ou la revendication 8, dans laquelle la solution est appliquée sous la forme d'un aérosol.

10. Utilisation d'un lactate en tant que solvant pour le chloropropham, dans laquelle le lactate est un hexyllactate ou un alkylhexyllactate.

11. Utilisation selon la revendication 9 ou 10, dans laquelle le lactate est le 2-méthylhexyllactate, le 2-éthylhexyllactate, le 2-pentylhexyllactate, le 2-butylhexyllactate.

12. Utilisation selon la revendication 11, dans laquelle le lactate est le 2-éthylhexyl-S-lactate.
